# EUROPÄISCHE PATENTSCHRIFT

(11) **EP 3 197 671 B1**
(45) Veröffentlichungstag und Bekanntmachung des Hinweises auf die Patenterteilung: **10.11.2021**
(21) Anmeldenummer: 15767159.5
(22) Anmeldetag: 23.09.2015
(51) Int. Cl.: B30B 11/08, B30B 11/00

(54) **TABLETTIERMASCHINE UND VERFAHREN ZUR IDENTIFIKATION EINER DRUCKROLLENSÄULE IN EINER TABLETTIERMASCHINE**
TABLET MACHINE AND METHOD FOR IDENTIFYING A PRESSURE ROLLER COLUMN IN A TABLETTING MACHINE
MACHINE À COMPRIMÉS ET PROCÉDÉ POUR L' IDENTIFICATION D'UNE ENCEINTE DE COMPRESSION DANS UNE MACHINE À FABRIQUER LES COMPRIMÉS

(30) Priorität: 23.09.2014 EP 14185958
(43) Veröffentlichungstag der Anmeldung: 02.08.2017
(73) Patentinhaber: Korsch AG, 13509 Berlin (DE)
(72) Erfinder: HEGEL, Walter, 13437 Berlin (DE)
(74) Vertreter: Hertin und Partner Rechts- und Patentanwälte PartG mbB
(86) Internationale Anmeldenummer: PCT/EP2015/071902
(87) Internationale Veröffentlichungsnummer: WO 2016/046280

(56) Entgegenhaltungen:
- EP-A1- 0 936 562
- EP-A2- 1 338 409
- EP-A2- 1 995 823
- WO-A1-2012/152375
- DE-A1-102006 031 401
- DE-U1-202005 017 516
- GB-A- 2 276 476
- US-A1- 2014 132 720
- None

## Beschreibung

Die Erfindung betrifft ein Tablettiermaschine umfassend ein System zur Identifikation einer Druckrollensäule, und ein Verfahren zur Identifikation einer Druckrollensäule in einer Tablettiermaschine mit einem Maschinenprozessor, wobei das System eine Steckverbindung umfasst, die eine Aufnahmebuchse und einen Stecker umfasst, wobei der Stecker mindestens einen embedded controller aufweist und Daten zwischen dem Maschinenprozessor der Tablettiermaschine und dem embedded controller des Steckers mittels der einen Steckverbindung austauschbar sind und der Stecker und die Aufnahmebuchse an der Tablettiermaschine angeordnet vorliegen, wobei der Stecker mit der Aufnahmebuchse verbindbar ist. Im Stand der Technik sind Tablettiermaschinen oder Rundläufertablettenpressen beschrieben, in denen Druckrollensäulen eingesetzt werden. Diese Druckrollensäulen können je nach Typ vollkommen identisch aussehen und sind visuell nicht zu unterscheiden. Im Stand der Technik sind daher verschiedene Methoden und Verfahren beschrieben, um auch äußerlich gleich aussehende Druckrollensäulen mit unterschiedlichen technischen Merkmalen unterscheiden zu können. Druckrollensäulen können sich beispielsweise durch unterschiedliche Messbolzen, Verstellwege und Wegaufnehmer unterscheiden, die unterschiedliche Kräfte aufnehmen können. Im Stand der Technik werden Kodierungen beschrieben, mit denen Druckrollensäulen versehen sind und mit deren Hilfe identisch aussehende Druckrollensäulen unterschieden werden können. Diese Kodierungen können mechanischer oder digitaler Natur sein. Beispielsweise können Druckrollensäulen mit selbstsprechenden oder fortlaufenden Kennzeichnungen versehen sein. Bei einer fortlaufenden Kennzeichnung müssen die Informationen bezüglich der Druckrollensäule auf der Säule aufgedruckt vorliegen. Die Daten könnten auch in einer Datei enthalten sein, die konsultiert werden muss, wenn geprüft werden soll, auf welche Weise die Druckrollensäule konfiguriert ist.

Beispielsweise wird in der DE 20 2005 017 516 U1 eine Rundläufer-Tablettiermaschine offenbart, bei der einzelne Baugruppen und/oder Einzelteile von Baugruppen der Tablettiermaschine austauschbar, wobei jede Baugruppe oder jedes Einzelteil einer Baugruppe einen eindeutig identifizierbaren Transponder umfasst, der mittels einer Sende-/Empfangseinheit auslesbar ist. Ein solcher Transponder kann beispielsweise ein RFID-Sensor (radio-frequency identification) sein, mit denen die Baugruppe oder die Einzelteile der Baugruppe versehen sind. Üblicherweise werden zwischen einem Sender und einem Empfänger elektrische Wellen übertragen. Die RFID-Technologie basiert demgemäß auf der Verwendung von elektromagnetischer Induktion. Dabei kann es jedoch zu Störsignalen oder Störsenken durch die ferromagnetischen Bestandteile einer Tablettiermaschine oder einer Rundläufertablettenpresse kommen. Es ist demgemäß ausgeschlossen, einen Sender oder einen Empfänger an einem beliebigen Ort in der Tablettiermaschine oder der Rundläufertablettenpresse zu platzieren. Sender und Empfänger müssen möglichst nah beieinander platziert sein, damit die umgebende Eisenmasse möglichst wenig Einfluss auf die Signalgüte oder Funktionalität des RFID-Sensors hat. Ein weiterer Nachteil der RFID-Technologie ist, dass ihre Verwendung im Vergleich zu anderen Verfahren mit hohen Kosten verbunden ist.

Durch die Übertragung von elektromagnetischen Wellen zwischen Sender und Empfänger können beispielsweise Identifikationsdaten der Druckrollensäule übermittelt werden. Damit befindet sich die Information bezüglich der Druckrollensäule nicht mehr ausschließlich in der Druckrollensäule, sondern auch in einem externen System. Somit kann ein solches System anfällig für Missbrauch oder Manipulation sein.

Eine ebenfalls auf dem Einsatz von Transpondern beruhende Überwachung für die Anordnung und Funktion von Komponenten oder Baugruppen einer Tablettiermaschine ist in der EP 1 338 409 A2 offenbart, wobei mit der kontaktlosen Ausgestaltung der Kommunikation zwischen einem Schreib- beziehungsweise Lesekopf und den Transpondern eine aufwändige Verdrahtung einzelner Signalgeber, Sensoren oder Schalter vermieden werden soll. Eine solche aufwändige Verdrahtung ergibt sich, wenn jede Komponente oder jede Baugruppe einzeln mit dem Schreib- beziehungsweise Lesekopf verbunden wird.

Es ist darüber hinaus möglich, Druckrollensäulen mit Barcodes (Streifencodes) oder QR-Codes (*quick response*) zu versehen. Dabei hat es sich als technologisch herausfordernd erwiesen, die Druckrollensäulen so mit diesen Code-Typen zu verbinden, dass die Codes jederzeit fehlerfrei ausgelesen werden können. Sowohl die Barcode-, als auch die QR-Code-Technologie beruht auf einem starken optischen Kontrast zwischen einem hellen, zumeist weißen Hintergrund, und den charakteristischen dunklen, vor allem schwarzen Streifen oder Mustern. Die an der Druckrollensäule angebrachten Codes können leicht beschädigt oder verschmutzt werden, was ihre Funktionsfähigkeit beeinträchtigt. Darüber hinaus ist es schwierig, das Anbringen der Codes in den Herstellungsprozess der Druckrollensäulen zu integrieren. Weiter muss die Befestigung an die Druckrollensäule so haltbar erfolgen, dass sich die Codes während des Wechsel-, Produktions- oder Reinigungsprozesses nicht von der Druckrollensäule lösen. Dies gilt insbesondere für Wash-In-Place Maschinen.

Nachteilig an der Codierung einer Druckrollensäule, bevor sie in die Tablettiermaschine eingebaut wird, ist, dass nicht alle charakteristischen Merkmal der Druckrollensäule in der Codierung enthalten sein können. Dies betrifft beispielsweise die Empfindlichkeit der Messbrücke und insbesondere Daten, die sich während der Lebensdauer der Maschine verändern. Darüber hinaus ist es möglich, dass Druckfarbe, mit der die Codierung auf die Drucksäule aufgebracht wird, abblättert und gegebenenfalls in die herzustellenden Tabletten gelangen kann. Dies verstößt gegen die gute Herstellungspraxis (GMP) uns ist unbedingt zu vermeiden.

In dem Fall, dass die Codierung geätzt wird, muss der Ätzvorgang vor der Oberflächenbehandlung der Druckrollensäule stattfinden. Spätere Änderungen können dann nicht mehr erfasst werden.

In der DE 10 2011 101 292 B4 werden mechanische Codierelemente offenbart, bei denen es sich um Ausnehmungen und Vorsprünge handeln kann, die die Position einer Mehrzahl von Steuerkurvenelementen an einem Kurventräger einer Tablettenpresse eindeutig vorgegeben ist. Nachteilig an diesen mechanischen Codierelementen ist, dass die ineinander greifenden Bauteile mit hoher Präzession gefertigt werden müssen, was sich besonders dann als technologisch anspruchsvoll darstellt, wenn die in der Tablettenpresse auftretenden Belastungen die Verwendung von gehärteten Materialien erforderlich macht. Dadurch kann es passieren, dass sich Bauteile verziehen und gerichtet werden müssen, was die Präzession eines Bauteils beeinträchtigt.

In der DE 10 2011 101 287 B4 wird eine Abstreifeinrichtung einer Tablettenpresse mit einer Identifikation- und/oder Positioniereinheit und Identifikation- und/oder Positionierdaten offenbart. Dabei umfasst die Abstreifeinrichtung eine Lese- und/oder Schreibeinheit, die dazu ausgebildet ist, mit der mindestens einen Identifikations- und/oder Positioniereinheit zu kommunizieren, um die Identifikations- und/oder Positionierdaten aus der mindestens einen Identifikations- und/oder Positioniereinheit auszulesen. Es wird vorgeschlagen, diese Kommunikation drahtlos auszuführen. Durch die drahtlose Kommunikation, die auf der Übertragung elektromagnetischer Wellen basiert, können die oben im Zusammenhang mit der RFID-Technologie genannten Nachteile auftreten. Insbesondere die Verwendung von eisenhaltigen, und somit ferromagnetischen Bestandteilen in einer Tablettenpresse führt zu Störungen und Abschirmeffekten bei der Signalübertragung.

In der WO 2012/152375 A1 wird ein Verfahren zum Betrieb einer Anlage zur Herstellung von Tabletten offenbart, wobei in ein Speicher- und Kommunikationsbauteil, das an den Rotorpaketen angeordnet vorliegt, ein an den Rotortyp angepasster Datensatz eingespeichert werden kann. Es ist bekannt, dass der Rotor oder seine Bestandteile beim Betrieb der Rundläuferpresse eine Drehbewegung ausführen, weswegen für die Verwendung von drehbaren Bestandteilen der Rundläuferpresse vor allem drahtlose Kommunikationsmittel in Betracht kommen. Sollten dennoch drahtbehaftete Kommunikationsmittel an den Rotorpaketen verwendet werden, kann sich dies nachteilig auf die Handhabbarkeit der Rundläuferpresse auswirken und die Wahrscheinlichkeit einer Falschverkabelung ist gegeben.

Ausgehend von diesem Stand der Technik ist es die Aufgabe der vorliegenden Erfindung, eine Tablettiermaschine (10) umfassend ein System zur Identifikation einer Druckrollensäule in einer Tablettiermaschine bereitzustellen, das nicht die Mängel und Nachteile des Standes der Technik aufweist. Insbesondere soll eine System und ein Verfahren zur Identifikation von Druckrollensäulen als nicht-rotierenden Bestandteilen einer Tablettiermaschine, bereitgestellt werden, bei dem eine aufwändige Verkabelung und Verdrahtung der Bauteile vermieden und bei auf den Einsatz von solchen Kommunikationsmitteln verzichtet wird, die auf der Übermittlung von elektromagnetischen Wellen beruhen, da solche Kommunikationsmittel in Verbindung mit den großen Eisen- beziehungsweise Stahlmassen stark störungsanfällig beziehungsweise durch einen hohen Energieverbrauch für die Datenübermittlung gekennzeichnet sind.

Gelöst wird diese Aufgabe durch die Merkmale des Anspruchs 1.

Es war vollkommen überraschend, dass ein System zur Identifikation einer Druckrollensäule bereitgestellt werden kann, welches visuell nicht zu unterscheidende Druckrollensäulen für die Tablettiermaschine unterscheidbar macht. Dabei stellt das erfindungsgemäße System eine besonders kostengünstige und leicht auszulesende Lösung dar. Darüber hinaus war es vollkommen überraschend, dass es möglich ist, ein System zur Identifikation von Druckrollensäulen zur Verfügung zu stellen, bei dem die Identifikationsdaten der Druckrollensäule innerhalb der Druckrollensäule gehalten werden können. Das Auslesen im Bedarfsfall stellt sicher, dass die richtige Druckrolle zum richtigen Zeitpunkt an der richtigen Stelle angeordnet vorliegt. Es war insbesondere überraschend, dass erfindungsgemäß die Identifikation der Druckrollensäulen mit einer einzigen Steckverbindung realisiert werden kann, so dass eine aufwändige Verkabelung und Verdrahtung verschiedener Komponenten und Gruppen von Komponenten wirksam vermieden wird. Vorteilhafterweise ermöglicht diese einzige Steckverbindung zwischen embedded controller im Stecker und dem Maschinenprozessor in der Tablettiermaschine einen Austausch von Daten und/oder Informationen, wobei ein "Austausch" im Sinne der Erfindung bevorzugt eine zweiseitige Übertragung von Daten und/oder Informationen zwischen embedded controller und Maschinenprozessor darstellt.

Der Stecker wird aufgrund seines modularen Aufbaus synonym auch als Steckersystem bezeichnet. Die Verwendung nur einer Steckverbindung ermöglicht die Auswahl eines Steckers mit mehreren überraschenden Vorteilen: Der ausgewählt Stecker oder das ausgewählte Steckersystem dient vorzugsweise zum einem zur Übertragung von Signalen mittels der Kontaktierung. Darüber hinaus kann es im Sinne der Erfindung bevorzugt sein, im Stecker hoch empfindliche Niederstrom-Signalleitungen einzubringen, die beispielsweise erforderliche für die Kommunikation mit dem embedded controller, das heißt dem Prozessor und/oder Speicherchip, sind. Zum anderen kann es bevorzugt sein, überraschend robuste Hochstrom-Kontakte für die Stromübertragung der Motoren im Stecker vorzusehen.

Es ist weiter bevorzugt, dass in einem weiteren Modul des Steckers weitere Steckerkontakte installiert sind, die vorzugsweise für die Übertragung der Wegaufnehmersignale benötigt werden.

Nach der Erfindung umfassen der Stecker und die Aufnahmebuchse zueinander korrespondierende Module. Der modulare Aufbau des Stecker oder des Steckersystems ermöglicht überraschenderweise die Realisierung einer Vielzahl von Aufgaben, die im Stand der Technik von mehreren einzelnen Steckern erledigt werden. Es war insbesondere überraschend, dass beispielsweise hoch empfindliche Signalleitungen, Hochstromleitungen und die Signalleitungen für Wegaufnehmer, die Ansteuerung und Energieübertragung der Motoren in den einen bevorzugt modulartig aufgebauten Stecker integriert werden können.

Es ist bevorzugt, dass das Steckersystem eine Logik-Leiterplatte, einen Prozessor, einen Speicherchip und andere elektronischen Bauelemente umfasst, wobei es eine Abkehr vom Stand der Technik darstellt, diese Komponenten in einen Stecker zu integrieren. Es war insbesondere vollkommen überraschend, dass die genannten Komponenten nicht, wie im Stand der Technik beschrieben, in einem eigenen separaten Gehäuse untergebracht werden müssen.

Überraschenderweise können durch die Ausgestaltung des erfindungsgemäßen Systems unterschiedlichen Medien mit nur einer Zuführung der Druckrollensäule zugeführt werden, wozu bei konventionellen Tablettiermaschinen eine Vielzahl von Steckverbindungen erforderlich ist, die zu den bekannten Verkabelungsproblemen führen können.

Nach der Erfindung umfasst der embedded controller einen Prozessor. Im Sinne dieser Erfindung ist ein Prozessor bevorzugt eine Maschine und/oder eine elektronische Schaltung, die insbesondere mittels Befehlen andere Maschinen und/oder elektrische Schaltungen steuert. Beispielsweise kann dafür Prozesse und/oder Algorithmen verwendet werden, die auf Verfahren aus dem Bereich der Datenverarbeitung zurückgreifen.

In einer weiteren bevorzugten Ausführungsform der Erfindung umfasst der Prozessor mindestens einen Eingang zum Einlesen der Daten und mindestens einen Ausgang zur Ausgabe der Daten. Dadurch wird vorteilhafterweise das Ein- und Auslesen von Daten ermöglicht, so dass der embedded controller Daten, die von außen an ihn übertragen werden, auch ausgeben kann. Im Sinne der vorliegenden Erfindung wird diese Fähigkeit bevorzugt als Gateway-Eigenschaft des embedded controllers bezeichnet, wobei der embedded controller vorzugsweise weiter in der Lage ist, Daten zu verarbeiten in dem Sinne, dass Daten beispielsweise verändert und weitergeleitet werden können.

Es ist bevorzugt, dass der Stecker einen Prozessor aufweist, wobei der Prozessor des Steckers kommuniziert mit dem Maschinenprozessor der Tablettiermaschine. Dies ermöglicht eine schnelle, sichere und wenig fehleranfällige Übertragung der Daten. Ein Maschinenprozessor ist im Sinne der Erfindung bevorzugt eine zentrale Recheneinheit der Tablettiermaschine, mit denen Befehle und/oder Softwareprogrammprodukte ausgeführt werden. Es ist im Sinne der Erfindung insbesondere bevorzugt, dass es sich bei dem Prozessor, der bevorzugt den embedded controller bildet und im Stecker der erfindungsgemäßen Steckverbindung angeordnet vorliegt, nicht um den Maschinenprozessor der Tablettiermaschine handelt. Es ist dahingegen bevorzugt, dass es sich dabei um zwei unterschiedliche, voneinander unabhängige Systembestandteile handelt, die an unterschiedlichen Orten des Systems angeordnet vorliegen.

Nach der Erfindung werden Daten durch den Prozessor, der in dem Stecker vorliegt, ausgewertet. Es ist bevorzugt, dass der Prozessor die einzelnen Teilnehmer des erfindungsgemäßen Systems identifiziert und die Daten ein- und/oder ausliest. Darüber hinaus werden die Daten für die übergeordnete Ebene, beispielsweise unter Verwendung eines Wrap-uppers, zusammengefasst. Vorteilhafterweise ist die Anzahl der Teilnehmer des Systems nahezu unbegrenzt. Das erfindungsgemäße Verfahren ist vorteilhafterweise nicht nur zur Codierung von Druckrollensäulen geeignet, sondern kann auch zur Codierung von weiteren Bestandteilen der Tablettiermaschine verwendet werden.

Im Sinne der vorliegenden Erfindung bezeichnet der Begriff "Wrap-Upper" bevorzugt ein System, das als Sammelstelle oder zusammenfassende Einheit fungiert.

Vorzugsweise fasst der Wrap-Upper die bevorzugt aufgeschalteten Daten der einzelnen Teilnehmer des erfindungsgemäßen Systems zusammen und stellt sie beispielsweise mittels eines Bus-Systems einem zentralen Daten-Verarbeitungs-System zur Verfügung. Im Sinne der Erfindung kann der Wrap-Upper vorzugsweise auch als "Datensammler" bezeichnet werden. Es ist bevorzugt, dass der Wrap-Upper zentral, also beispielsweise in der Nähe der einzelnen Tablettiermaschinen-Bereiche, platziert werden kann. Vorteilhafterweise wird dadurch ermöglicht, dass die Teilnehmer in beliebiger Topologie, das heißt zum Beispiel ring- und/oder sternförmig, auf den Wrap-Upper verdrahtet und von dort mit nur einem System zum Hauptrechner verbunden werden können. Dadurch wird zeitaufwändiges Verkabeln in einem überraschenden Ausmaß reduziert. Es war weiter vollkommen überraschend, dass durch die bevorzugte Verwendung eines Wrap-Uppers auch eine erste logische Verknüpfungsstelle, die vorzugsweise Daten zusammenfasst, bereitgestellt werden kann.

Nach der Erfindung umfasst der embedded controller einen Prozessor und einen Speicherchip. Ein Speicherchip im Sinne der Erfindung ist bevorzugt ein Schaltkreis, der bevorzugt aus einer Vielzahl von Speicherzellen bestehen und integriert vorliegen kann. Ein Speicherchip im Sinne der Erfindung wird insbesondere zur Speicherung von Daten verwendet. Es ist bevorzugt, dass der Speicherchip in dem Stecker an der Druckrollensäule vorliegt. Dadurch wird Platz gespart und eine Raum- und kostensparende Ausführung der Tablettiermaschine wird ermöglicht.

In einer weiteren bevorzugten Ausführungsform der Erfindung speichert und/oder verwendet der Speicherchip des Steckers Daten, insbesondere ausgewählt aus der Gruppe Identifikations- und Charaktierisierungsdaten einer Druckrollensäule oder anderer Komponenten der Tablettiermaschine, nämlich Rotor, Füll- oder Dosierkurven, Tablettenabstreifer und/oder Füllschuh, Daten zur Empfindlichkeit der Messstellen, Kalibrierdaten, Daten zur Ausprägung der Druckrollensäule, Daten über Anzahl und Art der Messstellen, Verstellwege, Wegaufnehmer und Sensoren

In einer weiteren bevorzugten Ausgestaltung der Erfindung sind die Daten, die auf dem Speicherchip gespeichert werden, insbesondere ausgewählt aus der Gruppe Identifikationsdaten der Druckrollensäule oder anderen Komponenten der Tablettiermaschine, Daten zur Empfindlichkeit der Messstellen, Kalibrierdaten, Daten zur Ausprägung der Druckrollenstation, Daten über Anzahl und Art der Messstellen, Verstellwege, Wegaufnehmer und Sensoren.

Andere Komponenten der Tablettiermaschine können bevorzugt Rotor, Füll- oder Dosierkurven, Tablettenabstreifer und/oder Füllschuh sein. Die Daten, die beispielsweise die Druckrollensäule charakterisieren, werden ausgelesen und bei Änderungen wieder in den Speicherchip hineingeschrieben. Eine Speicherung auf einem Rechner ist vorteilhafterweise nicht erforderlich. Es war vollkommen überraschend, dass durch das erfindungsgemäße Verfahren eine Identifikation visuell identischer Druckrollensäulen durch die Verwendung der genannten Daten erreicht werden kann.

In einer weiteren bevorzugten Ausführungsform der Erfindung umfasst die Steckverbindung einen Wrap-Upper zur Zusammenfassung und/oder Aufbereitung der Daten. Bevorzugt ist weiter, wenn die Daten von der Druckrollensäule oder der anderen Teilnehmer des erfindungsgemäßen Systems an den Wrap-Upper übertragen werden. es ist bevorzugt, dass der Wrap-Upper die Daten zusammenfasst und/oder aufbereitet, so dass die Daten insbesondere im Maschinenprozessor der Tablettiermaschine weiterverarbeitet und/oder ausgewertet und/oder auf einem Display ausgegeben werden können.

In einer weiteren bevorzugten Ausführungsform der Erfindung liegt der Wrap-Upper außerhalb der Druckrollensäule und/oder in der Tablettiermaschine vor. Dadurch ist er insbesondere leicht zugänglich und kann besonders einfach und schnell gewartet, gereinigt oder ausgetauscht werden.

Es ist bevorzugt, wenn das erfindungsmäßige System Bestandteil einer modular aufgebauten Tablettiermaschine ist. Bei solchen Tablettiermaschinen können die Druckrollenstationen je nach Maschinenkonfiguration vorteilhafterweise an unterschiedlicher Stelle platziert werden. Vorzugsweise umfassen diese Maschinenkonfigurationen die Herstellung von Mehrschicht- (Einschicht-, Zweischicht-, Dreischicht-) und Mantelkerntabetten.

Mehrschichttabletten sind im Sinne der Erfindung bevorzugt solche Tabletten, bei denen mehrere Schichten aus unterschiedlichem Pressmaterial zu einer Tablette verpresst werden. Bevorzugt ist, dass diese unterschiedlichen Pressmaterialien unterschiedliche Wirkstoffe beinhalten, die es aufgrund ihrer chemischen und/oder mechanischen Beschaffenheit und/oder aufgrund unterschiedlichen Rezeptionsverhaltens erforderlich machen, in unterschiedlichen Schichten innerhalb einer Tablette, gegebenenfalls mit einem sich unterscheidenden Trägermaterial, bereitgestellt zu werden. Vorteilhafterweise handelt es sich bei allen Schichten um unterschiedliche Pressmaterialien. Es kann aber auch bevorzugt sein, dass zwei oder mehr Schichten aus gleichem Material bestehen und zwischen zwei gleichen Schichten eine abweichende Zwischenschicht verpresst wird.

Mantelkerntabletten sind im Sinne der Erfindung bevorzugt solche Tabletten, bei denen Einleger im Inneren einer Tablette verpresst werden. Ein solcher Einleger wird vorzugsweise auch als Tablettenkern bezeichnet. Es ist bevorzugt, wenn es sich dabei um einen Chip und/oder eine Folie als Informationsträger handelt und/oder der Kern aus einem von dem Grundmaterial der Tablette abweichenden Trägermaterial und/oder Wirkstoff besteht.

Die Druckrollensäulenposition wird bevorzugt durch einen Bolzen arretiert und festgehalten. Es ist weiter bevorzugt, dass beim Lösen des Bolzens und Beaufschlagung mit Druckluft ein Luftpolster entsteht, mit dem die Druckrollensäule an einer anderen Stelle platziert werden kann. Die Druckrollensäulen können vorteilhafterweise für verschiedene Aufgaben unterschiedlich ausgestattet sein. Es besteht daher ein Bedürfnis, die Konfiguration und Ausgestaltung der Drucksäule zu erkennen, was mit dem erfindungsgemäßen System überraschend einfach und sicher gewährleistet wird.

Die Motoren zur oberen und unteren Druckrollenverstellung enthalten bevorzugt die Wegerfassungssysteme für die Positionierung der Druckrollen in Bezug auf den Matrizentisch. Vorteilhafterweise können sowohl der obere als auch der untere Druckrollenbolzen instrumentiert sein, um die notwendige Presskraft zur Verformung der Tablette zu erfassen. Die Position der oberen Druckrolle wird bevorzugt von einem Eintauchentiefenmotor eingestellt, die Position der unteren Druckrolle von einem Steghöhenmotor.

Es ist bevorzugt, dass mittels des Eintauchentiefenmotor die Eintauchtiefe der oberen Druckstempel in die Matrize eingestellt werden kann. Mit Hilfe des unteren Verstellantriebs wird vorzugsweise die Steghöhe der zu erzeugenden Tablette reguliert. In der Matrize einer Matrizenscheibe wirken Ober- und Unterstempel einer Rundlaufpresse bevorzugt dergestalt zusammen, dass aus dem zu verpressenden Pulvermaterial, das sich zwischen den Stempeln befindet, eine Tablette gepresst wird. Die Unterseite des Oberstempels und die Oberseite des Unterstempels sind dabei üblicherweise so geformt, dass zwischen den Stempeln ein Hohlraum besteht, dessen Form im Wesentlichen der Form der Tablette entspricht. Dabei sind die Ober- und Unterstempel vorzugsweise so geformt, dass sich die Ober- und Unterstempel während des Pressvorgangs nicht berühren. Durch die hohen Presskräfte könnten dadurch die Presswerkzeuge beschädigt werden. Stattdessen ist vorgesehen, dass sich zwischen den Stempeln zu verpressendes Pulvermaterial befindet.

Üblicherweise weisen Tabletten in einem mittleren Bereich eine größere Dichte als an den Rädern auf. Diese Dichte kann zu den Rändern abnehmen, wobei sie nicht den Wert null annimmt, was gleichbedeutend wäre mit einer unerwünschten Berührung der Ober- und Unterstempel. Tabletten weisen an ihren Rändern also bevorzugt eine Dichte auf, die vorzugsweise als Steghöhe beziehungsweise Tablettenhöhe bezeichnet wird. Diese Steghöhe oder bzw. Tablettenhöhe wird in einer bevorzugten Ausführungsform der Erfindung mittels des Steghöhenmotors eingestellt.

Ein weiterer Vorteil der vorliegenden Erfindung besteht darin, dass durch die Verwendung einer Steckverbindung im Gegensatz zu der RFID-Technologie kein Schreib- und Lesekopf benötigt wird. Vielmehr wird lediglich eine Ausleseeinheit für mehrere Teilnehmer benötigt. Dies ermöglicht eine kosteneffizienten Produktion des erfindungsgemäßen Systems und das Einsparen von Ressourcen. Darüber hinaus führt die Einfachheit des Systems zu einer verringerten Störanfälligkeit der Druckrollensäule-Codierung im Vergleich zu im Stand der Technik bekannten Codierungssystemen.

Darüber hinaus ist das Codierungssystem der vorliegenden Anmeldung im vorhandenen Steckergehäuse untergebracht. Eine darüber hinaus gehende, schützende Infrastruktur des Systems ist vorteilhafterweise nicht erforderlich. Die vorliegende Erfindung vereint damit technische Vorteilhaftigkeit gegenüber herkömmlichen Codierungs-Typen mit der einfachen, kostengünstigen Integration in bereits vorhandene Bauteile der Tablettiermaschine, wodurch deren Volumenauslastung erhöht und Raum und Transportkosten gespart werden. Dies ist vor ist Tablettenpressen von besonderer Bedeutung, da viele Komponenten im Inneren der Presse untergebracht werden müssen.

Des Weiteren gewährleistet die Integration der Codierungsvorrichtung in das Steckergehäuse einen erhöhten Schutz gegenüber Datenmanipulation. Anders als bei der Datenübertragung durch elektromagnetische Wellen, ist es im vorliegenden Fall erforderlich, auch die Infrastruktur zu manipulieren beziehungsweise zu zerstören, wenn Daten bewusst manipuliert werden sollen. Dadurch kann eine solche Manipulation aber leichter aufgedeckt und behoben werden. Darüber hinaus weist die höhere Entdeckungsgefahr eine abschreckende Wirkung per se auf. Die manipulationssichere Ausführung entspricht vorteilhafterweise den Anforderungen der U.S. Food and Drug Administration (FDA) des U.S. Department of Health and Human Services.

In einer weiteren bevorzugten Ausführungsform betrifft die Erfindung ein System, bei dem ein Speicherchip Daten speichert und verwendet, die insbesondere ausgewählt sind aus der Gruppe Identifikationsdaten einer Druckrollensäule oder anderer Komponenten der Tablettiermaschine, Daten zur Empfindlichkeit der Messstelle, Kalibrierdaten, Daten zur Ausprägung der Druckrollenstation und Daten über die Anzahl und die Art der Messstellen, Daten zu den Verstellwegen, Daten der verwendeten Wegaufnehmer und/oder Sensoren, wie beispielsweise Typ und Ausführung. Diese anderen Komponenten der Tablettiermaschine umfassen Rotor, Füll- oder Dosierkurven, Tablettenabstreifer und/oder Füllschuh. Damit werden in dem Speicherchip vorteilhafterweise diejenigen Daten gespeichert und verwendet, mit denen die visuell identischen Druckrollensäulen unterschieden werden können beziehungsweise solche Daten, die in einem Rezept enthalten sind und vorteilhafterweise der Identifikation der Druckrollensäulen dienen.

Nachteilig an der RFID-Technologie ist, dass kaum zusätzliche Eigenschaften implementiert werden können. Die Flexibilität ist auf die Auswahl der Speichergröße und die Festlegung, ob Daten lesbar und/oder beschreibbar sein sollen, beschränkt. Durch die Verwendung des erfindungsgemäßen Systems ist es jedoch überraschenderweise möglich, Funktionen zu hinterlegen, die die Logik betreffen und die nicht durch den Maschinenprozessor der Tablettiermaschinensteuerung ausgelöst, sondern direkt vor Ort abgearbeitet werden. Dies ist insbesondere vorteilhaft, wenn schnelle Vorgänge ausgeführt werden sollen. Ein weiterer Vorteil des erfindungsgemäßen Systems besteht darin, dass es sich um ein offenes Identifikations-System handelt, das beliebig konfigurierbar ist und schnell und unkompliziert um weitere Eigenschaften erweitert werden kann. Beispielweise kann so die Änderung einer Historie hinterlegt werden. Vorteilhafterweise ermöglicht das erfindungsgemäße System die Anlage von beliebigen Daten und Datenstrukturen, die im Gegensatz zur RFID-Technologie nicht beschränkt sind. Das System ist offen und kann vorteilhafterweise auch zur Codierung anderer Bestandteile einer Tablettiermaschine genutzt werden.

Es ist weiter bevorzugt, dass der Stecker von der Aufnahmebuchse der Tablettiermaschine aufgenommen. Es war vollkommen überraschend, dass die erfindungsgemäße Aufgabe mit einer einzigen Steckverbindung umfassend einen erfindungsgemäßen Stecker und einer Aufnahmebuchse gelöst werden kann. Dies stellt insbesondere eine Abkehr vom Stand der Technik dar, in dem davon ausgegangen wurde, dass jedes Bauteil einzeln, beispielsweise mit einem Transponder, versehen sein muss. Auf diese Weise wird die Schnittstelle zwischen der Druckrollensäule und der Tablettiermaschine vorgegeben, an der sich die Druckrollensäule vorteilhafterweise von der Tablettiermaschine trennen und/oder mit dieser verbinden lässt.

Nach der Erfindung umfassen die Stecker und die Aufnahmebuchse zueinander korrespondierende Module. Im Sinne der Erfindung werden der Stecker und die Aufnahmebuchse bevorzugt auch als modulartig aufgebaut bezeichnet. Beispielsweise kann das erfindungsgemäß vorgesehene variable Stecker-Buchsen-System vorteilhafterweise so ausgewählt sein, dass der Stecker eine Verbindung für unterschiedliche Medien aufweist.

Dadurch kann beispielsweise die Zufuhr von sowohl Strom, als auch Druckluft über dasselbe Stecksystem realisiert werden. Es ist besonders bevorzugt, wenn die Module beispielsweise Signalleitungen, Hochstromkontakte oder Mittel zur Datenübertragung umfassen. Der Begriff korrespondieren bedeutet im Sinne der Erfindung bevorzugt, dass die Module des Steckers vorteilhafterweise so mit den Modulen der Aufnahmebuchse wechselwirken, dass eine Verbindung zwischen dem Stecker und der Aufnahmebuchse hergestellt wird, die den üblichen Belastungen beim Betrieb einer Tablettiermaschine standhält. Es ist insbesondere bevorzugt, wenn die äußere Gestaltung der Module, vor allem die Gestaltung der äußeren Form der Module, aufeinander abgestimmt ist. Vorteilhafterweise ermöglicht die modulartige Ausgestaltung des Steckers und der Aufnahmebuchse eine hohe Bedienerfreundlichkeit sowie eine große Anpassungsfähigkeit an die Bedürfnisse unterschiedlicher Nutzer der Tablettiermaschine.

Das flexible System erfüllt vorteilhafterweise eine Vielzahl von elektrischen Anforderungen. Dazu gehören das Vorhandensein vieler Kontakte auf engem Raum, die Abschirmung gegenüber Hoch-Frequenz-Strahlung, das Vorhandensein eines Schnittstellensteckers für beispielsweise Ethernet und BNC (koaxialer Steckverbinder für Hochfrequenzanwendungen), das Vorhandensein von Hochstromkontakten, die Lösung spezieller elektromagnetischer Applikationen, beispielsweise spezielle BUS-Stecker oder USB-Anschlüsse, sowie die Montage individueller Leiterkarten. Ein BUS (*binary unit system*) ist ein bidirektionales Datenübertragungssystem zur Übertragung von Daten zwischen mehreren Teilnehmern, bei dem die einzelnen Teilnehmer nicht an der Datenübertragung zwischen den anderen Teilnehmern beteiligt sind. Ein USB-Anschluss (*universal bus system*) ist ein BUS-System zur Verbindung eines Computers mit externen Geräten. Vorteilhafterweise arbeitet das BUS-System seriell, wobei einzelne Teile eines Datenpaktes nacheinander übertragen werden. Dadurch wird eine hohe Übertragungsrate erreicht. Die Verwendbarkeit der aufgeführten Verbindungen führt zu einer hochuniversellen Einsetzbarkeit des erfindungsgemäßen Systems.

In einem weiteren Aspekt betrifft die Erfindung ein Verfahren zur Identifikation einer Druckrollensäule durch eine Tablettiermaschine mit Maschinenprozessor, gemäß den Merkmalen des Anspruchs 6.

Das erfindungsgemäße Verfahren umfasst die Speicherung von Daten auf dem embedded controller des Steckers. Im Sinne der Erfindung ist damit insbesondere die Speicherung der Daten auf einem Prozessor oder auf einem Prozessor und/oder einem Speicherchip gemeint. Die Daten, die auf dem embedded controller des Steckers gespeichert werden, sind aus der Gruppe Identifikations- und Charaktierisierungsdaten einer Druckrollensäule oder anderer Komponenten der Tablettiermaschine, nämlich Rotor, Füll- oder Dosierkurven, Tablettenabstreifer und/oder Füllschuh, Daten zur Empfindlichkeit der Messstellen, Kalibrierdaten, Daten zur Ausprägung der Druckrollensäule, Daten über Anzahl und Art der Messstellen, Verstellwege, Wegaufnehmer und Sensoren, ausgewählt.

Erfindungsgemäß ist weiter vorgesehen, dass Vergleichsdaten auf dem Maschinenprozessor der Tablettiermaschine und/oder auf einem Diagnosegerät gepeichert werden. Vergleichsdaten sind im Sinne der Erfindung solche Daten, die auf dem Maschinenprozessor der Tablettiermaschine und/oder auf einem Diagnosegerät hinterlegt werden können und die einen Abgleich der Daten, die auf dem embedded controller des Steckers gespeichert sind, ermöglichen. Dieser Abgleich dient beispielsweise der Feststellung, ob der verwendete Druckrollensäulentyp für die Herstellung der vorgesehenen Tablettensorte geeignet ist und/oder ob die Druckrollensäule korrekt angeordnet, befestigt und/oder angeschlossen in der Tablettiermaschine vorliegt. Die Daten hinsichtlich des korrekten Zusammenbaus und der Frage, welche Druckrollensäulentypen für die Herstellung welcher Tablettensorten geeignet sind, können beispielsweise als Baupläne und/oder Rezepte vorliegen und werden im Sinne der vorliegenden Erfindung bevorzugt als Vergleichsdaten bezeichnet.

Der Begriff "Diagnosegerät" bezeichnet im Sinne der Erfindung eine Vorrichtung, mit der eine vorzugsweise direkte Verbindung zwischen dem embedded controller und der Tablettiermaschine aufgebaut werden kann, ohne dass ein "Wrap-Upper" und/oder ein Hauptrechner der Tablettiermaschine mit einem Computerprogramm-Produkt zur Kommunikation und Darstellung der Daten benötigt werden. Es ist bevorzugt, dass über diese Verbindung insbesondere Daten ausgelesen werden können. Beispielsweise kann dieser Datenauslesevorgang vorteilhafterweise dann erfolgen, wenn sich die Druckrollensäule bei einer Reparatur und/oder Wartung außerhalb der Tablettiermaschine befindet und deren Infrastruktur nicht zur Verfügung steht. Überraschenderweise lässt sich auf diese Weise das erfindungsgemäße System auch parametrieren, das heißt mit neuen und/oder erweiterten Daten speisen. Es ist bevorzugt, das Diagnosegerät zur Prüfung der Funktionen der Druckrollensäule zu verwenden oder zur Prüfung, ob möglicherweise Fehler vorhanden sind, die ohne das erfindungsgemäße System in der Tablettiermaschine nicht erkannt worden wären. Insbesondere ermöglicht die Verwendung eines Diagnosegeräts eine überraschend schnelle und effiziente Reparatur, Wartung und/oder Initialisierung der Druckrollensäule einer Tablettiermaschine.

Es ist weiter bevorzugt, dass die Vergleichsdaten auf dem Maschinenprozessor der Tablettiermaschine mit den Daten, die auf dem embedded controller des Steckers gespeichert sind, korrespondieren. Der Begriff "korrespondieren" bedeutet im Sinne der Erfindung bevorzugt, dass eine Übereinstimmung zwischen den Daten, die auf dem embedded controller des Steckers vorliegen, und den Vergleichsdaten, die in dem Maschinenprozessor der Tablettiermaschine, besteht, wobei eine Übereinstimmung der Daten beispielsweise zu einer Betriebsfreigabe für die Herstellung von Tabletten durch das erfindungsgemäße System führen kann.

Erfindungsgemäß erfolgt der Datenabgleich durch den Austausch von Daten zwischen dem Maschinenprozessor der Tablettiermaschine und dem embedded controller des Steckers mittels der einen Steckverbindung. Es ist dabei insbesondere bevorzugt, dass die Datenübertragung nicht auf Grundlage von elektromagnetischer Strahlung erfolgt, sondern kontakt- beziehungsweise drahtbehaftet. Vorteilhafterweise erfolgt die Identifikation der Druckrollensäule der Tablettiermaschine durch Abgleich der Daten des embedded controllers des Steckers mit den Vergleichsdaten des Maschinenprozessors der Tablettiermaschine und/oder des Diagnosegeräts.

Das erfindungsgemäße Verfahren stellt eine überraschend manipulationssichere Lösung dar und hat sich in Tests insbesondere als deutlich sichererer als die im Stand der Technik bekannten USB-Schnittstellen mit USB-Protokoll erwiesen. Nachteilig an der Verwendung der USB-Technologie ist, dass sie nur dann nutzbar ist, wenn jeder Teilnehmer über einen eigenen USB-Port, d.h. eine Schnittstelle, verfügt. Vorteilhafterweise werden die verwendeten Speicherprozessormedien im erfindungsgemäßen Identifikationssystem über ein gemeinsames Bus-System angeschlossen. Darüber hinaus ermöglich das erfindungsgemäße Verfahren überraschenderweise eine Port-Zuordnung.

In einer weiteren bevorzugten Ausgestaltung der Erfindung sind die Daten auf dem embedded controller des Steckers und die Vergleichsdaten auf dem Maschinenprozessor der Tablettiermaschine und/oder dem Diagnosegerät veränderbar. Es kann für einige Anwendungen bevorzugt sein, geänderte Daten zu übertragen, abzugleichen und/oder auf dem Speicherchip und/der Prozessor zu speichern. Dies ist besonders vorteilhaft bei nicht-statischen Daten, die sich im Laufe der Lebenszeit der Drucksäule oder einer weiteren Komponente der Tablettiermaschine ändern.

Bevorzugt ist weiter, wenn die Daten von der Druckrollensäule und/oder der anderen Teilnehmer an einen Wrap-Upper, der sich außerhalb der Druckrollensäule und/oder innerhalb der Tablettiermaschine befindet, übertragen werden. Dieser fasst die empfangenen Daten vorteilhafterweise zusammen und bereitet diese so auf, dass sie im Maschinenprozessor der Tablettiermaschine weiterverarbeitet, ausgewertet und/oder auf einem Display ausgegeben werden können. Es kann jedoch auch bevorzugt sein, dass der Wrap-Upper ein Teil der Maschinensteuerung ist.

In einer weiteren bevorzugten Ausgestaltung der Erfindung werden die Daten, die mittels der einen Steckverbindung ausgetauscht werden, von einem Wrap-Upper zusammengefasst und/oder aufbereitet. Dies ist besonders vorteilhaft, da das erfindungsgemäße Verfahren dadurch besonders effizient ablaufen und ein wirksames Datenmanagement gewährleistet werden kann. Der Begriff "Datenmanagement" bedeutet im Sinne der Erfindung bevorzugt, dass die Menge der zu verarbeitenden Daten dahingehend überprüft wird, ob einzelne Teilmengen der Daten oder auch alle zu verarbeitenden Daten gegebenenfalls bereits auf einem Speichermedium, beispielsweise dem Speicherchip, dem Prozessor und/oder dem Maschinenprozessor, gespeichert sind. Der Nutzer des erfindungsgemäßen Systems wird so besonders wirksam vor dem unbeabsichtigten Überschreiben und/oder Vernichten von Daten geschützt. Darüber hinaus ermöglicht das Datenmanagement im Sinne der Erfindung vorteilhafterweise eine Feststellung dahingehend, ob Datensätze beispielsweise gültig oder veraltet sind.

Es ist im Sinne der Erfindung insbesondere bevorzugt, dass die Daten des embedded controllers des Steckers zur Zusammenfassung und/oder Aufbereitung an den Wrap-Upper übertragen werden, bevor sie an den Maschinenprozessor der Tablettiermaschine weitergeleitet werden. Tests haben gezeigt, dass dieses Vorgehen einen wesentlichen Beitrag zu einem effizienten Datenmanagement im Sinne der vorliegenden Erfindung darstellt.

In einer weiteren bevorzugten Ausgestaltung der Erfindung kommuniziert der Maschinenprozessor der Tablettiermaschine über ein USB-Protokoll mit dem embedded controller des Steckers. Die Verwendung von USB-Protokollen hat sich als besonders benutzerfreundlich erwiesen, wobei die Verwendung von USB-Protokollen weit verbreitet ist, so dass sie eine hohe Akzeptanz unter den Nutzern geniessen und vorteilhafterweise eine hohe Kompatibilität der Datenformate und Kommunikationsmittel gewährleistet ist.

In einer weiteren bevorzugten Ausgestaltung der Erfindung kommuniziert der Maschinenprozessor der Tablettiermaschine über ein Kommunikationssystem mit dem embedded controller des Steckers, insbesondere ausgewählt aus der Gruppe Ethernet, Profibus, Feldbus, CAN-Bus. Mit der Verwendung eines BUS-Systems wird gewährleistet, dass mit einem Auslesesystem mehrere Druckrollensäulen identifiziert werden können. Jede Druckrollensäule ist hinsichtlich ihrer charakteristischen Identifikationsdaten einmalig. Auch wenn in einer Tablettiermaschine mehrere Druckrollensäulen vorliegen, wird nur ein Auslesesystem benötigt. Mit diesem einen Auslesesystem können gleichzeitig mehrere Informationen ausgelesen werden.

Vorteilhafterweise verwendet das erfindungsgemäße Verfahren ein offenes Codierungs-System, in dem Speicher und Prozessoren aufeinander abgestimmt werden können. Es ist bevorzugt, dass Funktionen hinterlegt werden, die nicht vom Steuerungsrechner abgearbeitet werden müssen. Dadurch wird eine schnelle und individuelle Abarbeitung der Aufgaben möglich. Vorteilhaft ist, dass Funktionen aktiviert werden können, die nach bestimmten zeitlichen und/oder inhaltlichen Vorgaben automatisch durchgeführt werden.

Weitere vorteilhafte Maßnahmen sind in den übrigen Unteransprüchen beschrieben; die Erfindung wird anhand von Ausführungsbeispielen und der nachfolgenden Figuren näher beschrieben; es zeigt:
- Figur 1:: schematische Darstellung des erfindungsgemäßen Verfahrens
- Figur 2:: schematische Seitenansicht einer Druckrollensäule
- Figur 3:: Draufsicht auf die Buchse mit einer beispielhaften Darstellung von vier frei konfigurierbaren Modulen
- Figur 4:: Seitenansicht eines beispielhaft bestückten Steckers

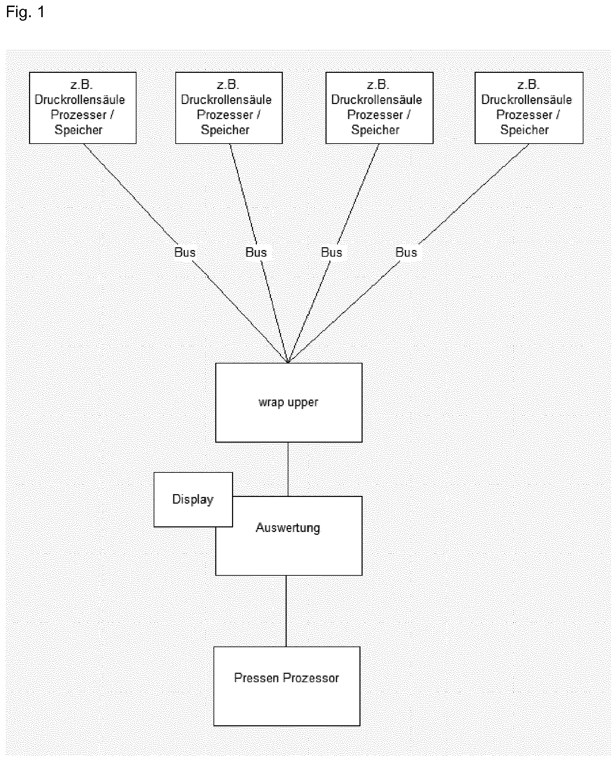

Figur 1 zeigt eine schematische Darstellung des erfindungsgemäßen Verfahrens nach Anspruch 4. Demnach betrifft die Erfindung ein Verfahren zur Identifikation einer Druckrollensäule durch eine Tablettiermaschine. Dabei werden unter Verwendung des erfindungsgemäßen Systems zur Identifikation einer Druckrollensäule (12) Daten auf einem Speicherchip gespeichert. Dieser Speicherchip befindet sich in einem Stecker (24), der zusammen mit einer Aufnahmebuchse das erfindungsgemäße System bildet. Der modular aufgebaute Stecker (24) kann auch einen Prozessor umfassen. Bei den Daten handelt es sich um Identifikationsdaten einer Druckrollensäule (12), Identifikationsdaten von anderen Komponenten der Tablettiermaschine, nämlich Rotor, Füll- oder Dosierkurven, Tablettenabstreifer und/oder Füllschuh, um Daten zur Empfindlichkeit der Messstellen, um Kalibrierdaten, um Daten zur Ausprägung der Druckrollenstation, um Daten über Anzahl und Art der Messstellen, Verstellwege und Wegaufnehmer. Es ist vorgesehen, dass sowohl Daten aus der Druckrollensäule (12) entnommen werden können und Daten aus anderen Komponenten der Tablettiermaschine. Wenn sich hinsichtlich dieser Daten Änderungen ergeben, können diese geänderten Daten optional von der Druckrollensäule (12) oder anderen Komponenten der Tablettiermaschine an den Speicherchip übertragen und dort gespeichert werden. Dies führt zu einer besonders flexiblen Anwendbarkeit des erfindungsgemäßen Verfahrens.

Die Daten werden von der Druckrollensäule (12) an einen Wrap-Upper mittels eines BUS-systems übertragen. Der Wrap-Upper befindet sich außerhalb der Druckrollensäule (12) in der Tablettiermaschine. Der Wrap-Upper fasst die Daten zusammen und bereitet sie auf. Die Daten werden von der Tablettiermaschine verwendet, um die Druckrollensäulen (12) zu identifizieren. Dies geschieht durch das Auslesen des Speicherchips durch die Tablettiermaschine und/oder ein Diagnosegerät. Das Ergebnis der Auswertung kann über einen Display ausgegeben werden. Es kann auch bevorzugt sein, dass die Daten durch einen Prozessor, der in dem modular aufgebauten Stecker (24) vorliegt, ausgewertet und/oder am Hauptbildschirm der Tablettiermaschine ausgegeben werden.

Die Tablettiermaschine umfasst einen Maschinenprozessor, der über ein USB-Protokoll mit dem Stecker (24) kommuniziert. Es ist auch bevorzugt, dass der Maschinenprozessor über ein anderes Kommunikationssystem mit dem Stecker (24) kommuniziert. Infrage kommen Kommunikationssysteme wie Ethernet, Profibus, Feldbus und/oder CAN-Bus. Im Sinne dieser Erfindung wird der Maschinenprozessor auch als Pressenprozessor bezeichnet.

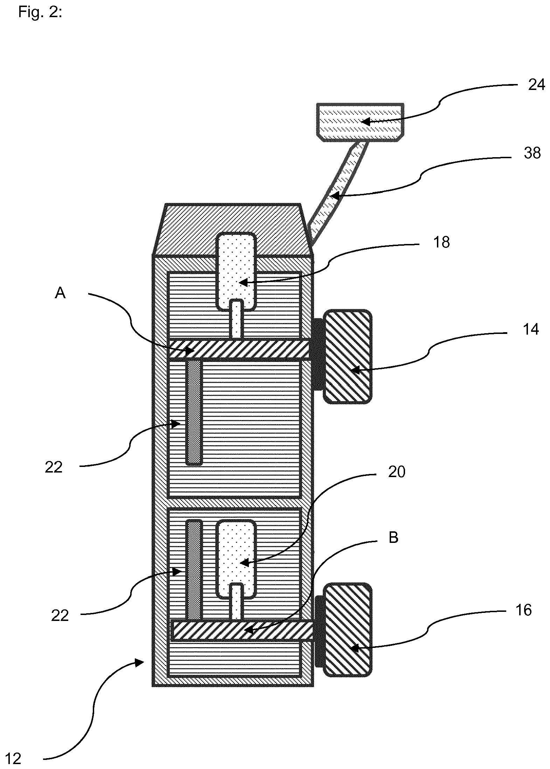

Figur 2 zeigt eine schematische Seitenansicht einer Druckrollensäule. Die Tablettiermaschine umfasst eine obere Druckrolle (14) und eine untere Druckrolle (16). Die Position der oberen Druckrolle (14) kann mittels eines Eintauchtiefenmotors (18) variiert werden. Dadurch ist es möglich, die Tiefe zu regulieren, mit der die oberen Pressstempel in die Öffnungen einer Matrizenscheibe eindringen, um das pulverförmige Tablettenmaterial zu verpressen. Zur Kontrolle der Position der oberen Druckrolle (14) umfasst die Tablettiermaschine Wegaufnehmer (22). Diese Wegaufnehmer (22) können beispielsweise als induktive Wegaufnehmer ausgebildet sein. Die Position der unteren Druckrolle (16) wird von einem Steghöhenmotor (20) reguliert. Auch hier kommt ein Wegaufnehmer (22) zum Einsatz. Ein Steg stellt den in einer Seitenansicht mittleren Bereich einer Tablette dar, der herstellungsbedingt erforderlich ist, damit die Presswerkzeuge während des Pressvorgangs nicht miteinander in Kontakt kommen. Dies würde ein erhebliches Beschädigungspotential für die Presswerkzeuge darstellen. Die Presskräfte werden über Dehnungsmessstreifen (A) und (B) aufgenommen, die an den Achsen der Druckrollen (14, 16) appliziert sind.

Wenn die Druckrollen (14, 16) nicht an einer Druckrollensäule (12) angebracht vorliegen, sondern an separaten Bauteilen der Tablettiermaschine, kann es zu Lärmbelästigungen kommen. Weiter streben die beiden Druckrollen (14, 16) während der Tablettenherstellung auseinander, d.h. die obere Druckrolle (14) strebt nach oben, die untere Druckrolle (16) strebt nach unten. Dadurch wirken auf die gesamte Tablettiermaschine und ihr Gehäuse enorme Kräfte. Diese Probleme werden durch die Verwendung einer oder mehrerer Druckrollensäulen (12) behoben, da diese Kräfte über die Druckrollensäule (12) und den Tablettiermaschinentisch, auf dem sich die Tablettiermaschine (12) befindet, abgeleitet werden.

Es ist üblich, für unterschiedliche Tabletten, Tablettenformen und Tablettenarten (Einschicht-, Zweischicht-, Mehrschicht- oder Einlegekern-Tabletten) unterschiedliche Druckrollensäulen (12) zu verwenden. Diese unterscheiden sich in der Regel nicht äußerlich voneinander, sondern durch ihren inneren Aufbau und die verwendeten Druckrollen (14, 16), sowie die Kraftübertragung. Um diese äußerlich nicht zu unterscheidenden Druckrollensäulen (12) identifizieren zu können und den richtigen Einbau einer Druckrollensäule (12) an der richtigen Stelle der Tablettiermaschine zu gewährleisten, ist es nötig, Mittel bereit zu stellen, verschiedene Druckrollensäulen (12) sicher und auf eine einfach zu handhabende Weise voneinander unterscheiden zu können. Dieses technische Bedürfnis löst das erfindungsgemäße System und das erfindungsgemäße Verfahren.

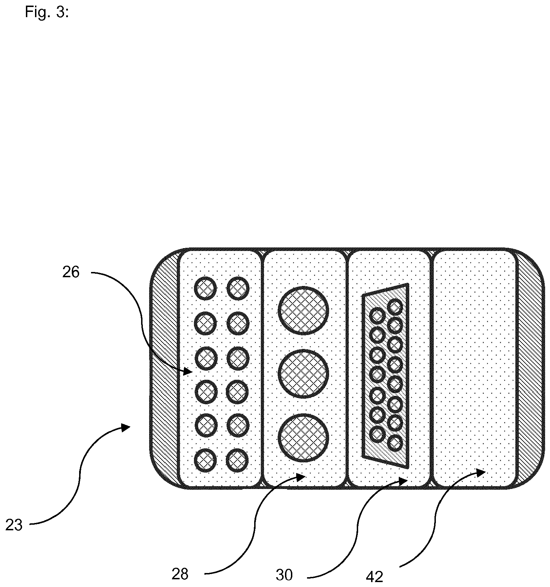

Abbildung 3 zeigt eine Draufsicht auf eine Buchse (23) als Bestandteil des erfindungsgemäßen Systems mit einer beispielhaften Darstellung von vier frei konfigurierbaren Modulen (26, 28, 30, 42). Deutlich zu erkennen ist in Abbildung 3 der modulartige Aufbau der Buchse (23). Abbildung 3 zeigt auch eine beispielhafte Bestückung einer Buchse (23). Beispielsweise befinden sich in dieser Buchse (23) ein typisches Modul für Signalleitungen (26), ein Modul für Hochstromkontakte (28), sowie ein Modul für Datenübertragung (30). Bei dem Modul für Signalleitungen (26) kann es sich beispielsweise um Wegaufnehmer oder Dehnungsmeßstreifen handeln. Das Modul für Hochstromkontakte (28) ist beispielsweise für die Ansteuerung eines Motors ausgebildet. In Rahmen dieser Erfindung ist die modulartige Buchse (23) nicht auf das Ausführungsbeispiel der Figur 3 beschränkt, sondern kann vielmehr weitere Module umfassen, die auf die dargestellte oder jede andere Weise angeordnet sein können.

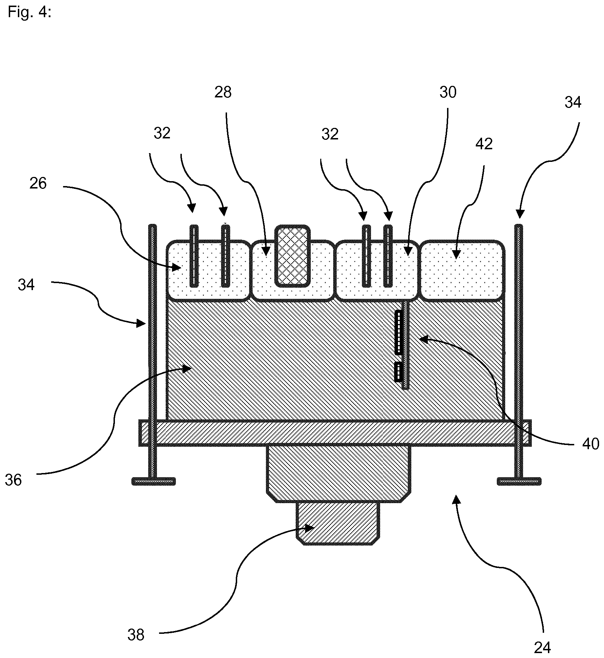

Figur 4 zeigt eine Seitenansicht eines beispielhaft bestückten Steckers (24). Zu erkennen sind beispielshaft vier Module (26, 28, 30, 42). Das Modul für Signalleitungen (26) und das Modul für Datenübertragung (30) sind mit Kontakten (32) versehen. Diese dienen zur Kontaktherstellung zwischen dem modular aufgebauten Stecker (24) und der Aufnahmebuchse. Das Modul für die Datenübertragung (30) umfasst weiter eine Leiterplatte (40). Um einen sicheren Halt in der Aufnahmebuchse zu gewährleisten, umfasst der modular aufgebaute Stecker (24) Befestigungsschrauben (34). Mit diesen kann der in der Aufnahmebuchse vorliegende modular aufgebaute Stecker (24) zusätzlich an der Tablettiermaschine festgeschraubt werden. Die Verbindung zur Druckrollensäule wird mit Hilfe einer Leitung oder eines Schlauches (38) hergestellt. Weiter umfasst der modular aufgebaute Stecker (24) einen Kabelrangierraum (36).

### Bezuaszeichenliste

- 12: Druckrollensäule
- 14: obere Druckrolle
- 16: untere Druckrolle
- 18: Eintauchtiefenmotor
- 20: Steghöhenmotor
- 22: Wegaufnehmer für Druckrollen
- A: obere Druckrollenachse mit applizierten Dehnungsmessstreifen
- B: untere Druckrollenachse mit applizierten Dehnungsmessstreifen
- 23: modular aufgebaute Buchse mit Modulbeispielen
- 24: modular aufgebauter Stecker mit Modulbeispielen
- 26: typisches Modul für Signalleitungen (beispielsweise Wegaufnehmer oder Dehnungsmeßstreifen)
- 28: Modul für Hochstromkontakte (beispielsweise für die Ansteuerung eines Motors)
- 30: Modul für Datenübertragung
- 32: Kontakte
- 34: Befestigungsschraube
- 36: Kabelrangierraum
- 38: Leitung oder Schlauch zur Druckrollensäule
- 40: Leiterplatte
- 42: Leermodul

## Patentansprüche

1. Tablettiermaschine (10) umfassend ein System zur Identifikation einer Druckrollensäule (12) in der Tablettiermaschine (10) mit einem Maschinenprozessor,
wobei das System eine Steckverbindung umfasst, die eine Aufnahmebuchse (23) und einen Stecker (24) umfasst, wobei der Stecker (24) mindestens einen embedded controller aufweist und Daten zwischen dem Maschinenprozessor der Tablettiermaschine (10) und dem embedded controller des Steckers (24) mittels der einen Steckverbindung austauschbar sind und der Stecker (24) und die Aufnahmebuchse (23) an der Tablettiermaschine (10) angeordnet vorliegen, wobei der Stecker (24) mit der
Aufnahmebuchse (23) verbindbar ist, wobei der embedded controller einen Prozessor und einen Speicherchip umfasst und die Daten durch den Prozessor im Stecker (24) ausgewertet werden und
wobei der Stecker (24) und die Aufnahmebuchse (23) zueinander korrespondierende Module (26, 28, 30) aufweisen, umfassend ein Modul für Signalleitungen (26), ein Modul für Stromkontakte (28) und ein Modul für Datenübertragung (30).

2. Tablettiermaschine nach Anspruch 1,
**dadurch gekennzeichnet, dass**
der Speicherchip des Steckers (24) Daten speichert und verwendet, insbesondere ausgewählt aus der Gruppe Identifikations- und Charaktierisierungsdaten einer Druckrollensäule (12) oder anderer Komponenten der Tablettiermaschine (10), nämlich Rotor, Füll- oder Dosierkurven, Tablettenabstreifer und/oder Füllschuh (44), Daten zur Empfindlichkeit der Messstellen, Kalibrierdaten, Daten zur Ausprägung der Druckrollensäule (12), Daten über Anzahl und Art der Messstellen, Verstellwege, Wegaufnehmer und Sensoren

3. Tablettiermaschine nach Anspruch 1 und/oder 2
**dadurch gekennzeichnet, dass**
die Steckverbindung einen Wrap-Upper zur Zusammenfassung und/oder Aufbereitung der Daten umfasst.

4. Tablettiermaschine nach einem oder mehreren der vorhergehenden Ansprüche
**dadurch gekennzeichnet, dass**
der Wrap-Upper außerhalb der Druckrollensäule (12) und/oder in der Tablettiermaschine (10) vorliegt.

5. Tablettiermaschine nach einem oder mehreren der Ansprüche 1 bis 4
**dadurch gekennzeichnet, dass**
der Prozessor mindestens einen Eingang zum Einlesen der Daten und mindestens einen Ausgang zur Ausgabe der Daten umfasst.

6. Verfahren zur Identifikation einer Druckrollensäule (12) durch eine Tablettiermaschine (10) mit Maschinenprozessor
**umfassend die folgenden Schritte**
a) Bereitstellung einer Steckverbindung umfassend eine Aufnahmebuchse (23) und einen Stecker (24), wobei der Stecker (24) und die Aufnahmebuchse (23) zueinander korrespondierende Module (26, 28, 30) aufweisen, umfassend ein Modul für Signalleitungen (26), ein Modul für Hochstromkontakte (28) und ein Module für Datenübertragung (30) und wobei der Stecker (24) mindestens einen embedded controller umfasst, wobei der embedded controller einen Prozessor und einen Speicherchip umfasst
b) Speicherung von Daten auf dem embedded controller des Steckers (24), wobei die Daten insbesondere ausgewählt sind aus der Gruppe Identifikations- und Charaktierisierungsdaten einer Druckrollensäule (12) oder anderer Komponenten der Tablettiermaschine (10), nämlich Rotor, Füll- oder Dosierkurven, Tablettenabstreifer und/oder Füllschuh (44), Daten zur Empfindlichkeit der Messstellen, Kalibrierdaten, Daten zur Ausprägung der Druckrollensäule (12), Daten über Anzahl und Art der Messstellen, Verstellwege, Wegaufnehmer und Sensoren,
c) Speicherung von Vergleichsdaten auf dem Maschinenprozessor der Tablettiermaschine (10) und/oder auf einem Diagnosegerät, wobei die Vergleichsdaten auf dem Maschinenprozessor der Tablettiermaschine (10) mit den Daten, die auf dem embedded controller des Steckers (24) gespeichert sind, korrespondieren,
d) Austausch der Daten zwischen dem Maschinenprozessor der Tablettiermaschine (10) und dem embedded controller des Steckers (24) mittels der einen Steckverbindung,
e) Identifikation der Druckrollensäule (12) der Tablettiermaschine (10) durch Abgleich der Daten des embedded controllers des Steckers (24) mit den Vergleichsdaten des Maschinenprozessors der Tablettiermaschine (10) und/oder des Diagnosegeräts, wobei die Daten durch den Prozessor im Stecker (24) ausgewertet werden.

7. Verfahren nach Anspruch 6
**dadurch gekennzeichnet, dass**
die Daten auf dem embedded controller des Steckers (24) und die Vergleichsdaten auf dem Maschinenprozessor der Tablettiermaschine (10) und/oder dem Diagnosegerät veränderbar sind.

8. Verfahren nach Anspruch 6 und/oder 7
**dadurch gekennzeichnet, dass**
die Daten, die mittels der einen Steckverbindung ausgetauscht werden, von einem Wrap-Upper zusammengefasst und/oder aufbereitet werden.

9. Verfahren nach Anspruch 8,
**dadurch gekennzeichnet, dass**
die Daten des embedded controllers des Steckers (24) zur Zusammenfassung und/oder Aufbereitung an den Wrap-Upper übertragen werden, bevor sie an den Maschinenprozessor der Tablettiermaschine (10) weitergeleitet werden.

10. Verfahren nach einem oder mehreren der Ansprüche 7 bis 9
**dadurch gekennzeichnet, dass**
der Maschinenprozessor der Tablettiermaschine (10) über ein USB-Protokoll mit dem embedded controller des Steckers (24) kommuniziert.

11. Verfahren nach einem oder mehreren der Ansprüche 7 bis 10
**dadurch gekennzeichnet, dass**
der Maschinenprozessor der Tablettiermaschine (10) über ein Kommunikationssystem mit dem embedded controller des Steckers (24) kommuniziert, insbesondere ausgewählt aus der Gruppe Ethernet, Profibus, Feldbus, CAN-Bus.

## Claims

1. A tableting machine (10) comprising a system for identifying a pressure roller column (12) in the tableting machine (10) with a machine processor,
wherein the system comprises a plug connection comprising a receptacle (23) and a plug (24), wherein the plug (24) has at least one embedded controller and data is interchangeable between the machine processor of the tableting machine (10) and the embedded controller of the plug (24) by means of the one plug connection, and the plug (24) and the receptacle (23) are present on the tableting machine (10), wherein the plug (24) can be connected to the receptacle (23),
wherein the embedded controller comprises a processor and a memory chip and the data is evaluated by the processor in the plug (24), and
wherein the plug (24) and the receptacle (23) have corresponding modules (26, 28, 30) comprising a module for signal lines (26), a module for current contacts (28), and a module for data transmission (30).

2. The tableting machine according to claim 1,
**characterized in that**
the memory chip of the plug (24) stores and uses data, in particular selected from the group of identification and characterization data of a pressure roller column (12) or other components of the tableting machine (10), namely rotor, filling or dosing curves, tablet stripper and/or filling shoe (44), data on the sensitivity of the measuring points, calibration data, data on the characteristics of the pressure roller column (12), data on the number and type of measuring points, adjustment paths, position transducers and sensors.

3. The tableting machine according to claim 1 and/or 2,
**characterized in that**
the plug connection comprises a wrap-upper for summarizing and/or preparing the data.

4. The tableting machine according to one or more of the preceding claims , **characterized in that** the wrap-upper is present outside the pressure roller column (12) and/or in the tableting machine (10).

5. The tableting machine according to any one of claims 1 to 4,
**characterized in that**
the processor comprises at least one input for reading in the data and at least one output for outputting the data.

6. A method for identifying a pressure roller column (12) by a tableting machine (10) with machine processor,
comprising the following steps:
a) providing a plug connection comprising a receptacle (23) and a plug (24), wherein the plug (24) and the receptacle (23) have corresponding modules (26, 28, 30) comprising a module for signal lines (26), a module for high current contacts (28), and a module for data transmission (30), and wherein the plug (24) comprises at least one embedded controller, wherein the embedded controller comprises a processor and a memory chip;
b) storing and using data on the embedded controller of the plug (24), wherein the data is in particular selected from the group of identification and characterization data of a pressure roller column (12) or other components of the tableting machine (10), namely rotor, filling or dosing curves, tablet stripper and/or filling shoe (44), data on the sensitivity of the measuring points, calibration data, data on the characteristics of the pressure roller column (12), data on the number and type of measuring points, adjustment paths, position transducers, and sensors;
c) storing comparison data on the machine processor of the tableting machine (10) and/or on a diagnostic device, wherein the comparison data on the machine processor of the tableting machine (10) correspond to the data stored on the embedded controller of the plug (24);
d) exchanging data between the machine processor of the tableting machine (10) and the embedded controller of the plug (24) by means of the one plug connection;
e) identifying the pressure roller column (12) of the tableting machine (10) by comparing the data of the embedded controller of the plug (24) with the comparison data of the machine processor of the tableting machine (10) and/or the diagnostic device, wherein the data is evaluated by the processor in the plug (24).

7. The method according to claim 6,
**characterized in that**
the data on the embedded controller of the plug (24) and the comparison data on the machine processor of the tableting machine (10) and/or the diagnostic device can be changed.

8. The method according to claim 6 and/or 7,
**characterized in that**
the data exchanged by means of the one plug connection is summarized and/or processed by a wrap-upper.

9. The method according to claim 8,
**characterized in that**
the data of the embedded controller of the plug (24) are transmitted to the wrap-upper for summarization and/or processing before being forwarded to the machine processor of the tableting machine (10).

10. The method according to any one of claims 7 to 9,
**characterized in that**
the machine processor of the tableting machine (10) communicates with the embedded controller of the plug (24) via a USB protocol.

11. The method according to any one of claims 7 to 10,
**characterized in that**
the machine processor of the tableting machine (10) communicates with the embedded controller of the plug (24) via a communication system, in particular selected from the group of Ethernet, Profibus, field bus, CAN bus.

## Revendications

1. Machine à comprimés (10) comprenant un système pour l'identification d'une enceinte de compression (12) dans la machine à comprimés (10) avec un processeur de machine, dans laquelle le système comprend une liaison par enfichage, qui comprend une douille de réception (23) et un connecteur (24), dans laquelle le connecteur (24) présente au moins un contrôleur intégré et des données sont échangées entre le processeur de machine de la machine à comprimés (10) et le contrôleur intégré du connecteur (24) au moyen de la liaison enfichable et le connecteur (24) et la douille de réception (23) sont présents de manière disposée sur la machine à comprimés (10), dans laquelle le connecteur (24) peut être relié à la douille de réception (23),
dans laquelle le contrôleur intégré comprend un processeur et une puce mémoire et les données sont évaluées par le processeur dans le connecteur (24) et
dans laquelle le connecteur (24) et la douille de réception (23) présentent des modules (26, 28, 30) correspondant les uns aux autres, comprenant un module pour des lignes de signal (26), un module pour des contacts électriques (28) et un module pour une transmission de données (30).

2. Machine à comprimés selon la revendication 1,
**caractérisée en ce que**
la puce mémoire du connecteur (24) stocke et utilise des données, en particulier sélectionnées dans le groupe des données d'identification et de caractérisation d'une enceinte de compression (12) ou d'autres composants de la machine à comprimés (10), à savoir rotor, courbes de remplissage ou de dosage, racleur de comprimés et/ou sabot de remplissage (44), données relatives à la sensibilité des points de mesure, données d'étalonnage, données relatives à la caractéristique de l'enceinte de compression (12), données concernant le nombre et le type de points de mesure, courses de déplacement, détecteurs de déplacement et capteurs.

3. Machine à comprimés selon la revendication 1 et/ou 2
**caractérisée en ce que**
la liaison par enfichage comprend un collecteur de données pour le regroupement et/ou traitement des données.

4. Machine à comprimés selon l'une ou plusieurs des revendications précédentes,
**caractérisée en ce que**
le collecteur de données est présent à l'extérieur de l'enceinte de compression (12) et/ou dans la machine à comprimés (10).

5. Machine à comprimés selon l'une ou plusieurs des revendications 1 à 4,
**caractérisée en ce que**
le processeur comprend au moins une entrée pour la lecture des données et au moins une sortie pour la sortie des données.

6. Procédé pour l'identification d'une enceinte de compression (12) à travers une machine à comprimés (10) avec un processeur de machine
comprenant les étapes suivantes
a) la fourniture d'une liaison par enfichage comprenant une douille de réception (23) et un connecteur (24), dans lequel le connecteur (24) et la douille de réception (23) présentent des modules (26, 28, 30) correspondant les uns aux autres, comprenant un module pour des lignes de signal (26), un module pour des contacts de haut courant (28) et un module pour une transmission de données (30) et dans lequel le connecteur (24) comprend au moins un contrôleur intégré, dans lequel le contrôleur intégré comprend un processeur et une puce mémoire
b) le stockage de données sur le contrôleur intégré du connecteur (24), dans lequel les données sont sélectionnées en particulier dans le groupe des données d'identification et de caractérisation d'une enceinte de compression (12) ou d'autres composants de la machine à comprimés (10), à savoir rotor, courbes de remplissage ou de dosage, racleur de comprimés et/ou sabot de remplissage (44), données relatives à la sensibilité des points de mesure, données d'étalonnage, données relatives à la caractéristique de l'enceinte de compression (12), données concernant le nombre et le type de points de mesure, courses de déplacement, détecteurs de déplacement et capteurs,
c) le stockage de données comparatives sur le processeur de machine de la machine à comprimés (10) et/ou sur un appareil de diagnostic, dans lequel les données comparatives sur le processeur de machine de la machine à comprimés (10) correspondent aux données qui sont stockées sur le contrôleur intégré du connecteur (24),
d) l'échange des données entre le processeur de machine de la machine à comprimés (10) et le contrôleur intégré du connecteur (24) au moyen d'une des liaisons par enfichage,
e) l'identification de l'enceinte de compression (12) de la machine à comprimés (10) par comparaison des données du contrôleur intégré du connecteur (24) aux données comparatives du processeur de machine de la machine à comprimés (10) et/ou de l'appareil de diagnostic, dans lequel les données sont évaluées par le processeur dans le connecteur (24).

7. Procédé selon la revendication 6
**caractérisé en ce que**
les données sur le contrôleur intégré du connecteur (24) et les données comparatives sur le processeur de machine de la machine à comprimés (10) et/ou l'appareil de diagnostic sont modifiables.

8. Procédé selon la revendication 6 et/ou 7,
**caractérisé en ce que**
les données, qui sont échangées au moyen de l'une des liaisons par enfichage, sont regroupées et/ou traitées par un collecteur de données.

9. Procédé selon la revendication 8,
**caractérisé en ce que**
les données du contrôleur intégré du connecteur (24) pour le regroupement et/ou traitement sont transmises au collecteur de données, avant qu'elles ne soient transférées au processeur de machine de la machine à comprimés (10).

10. Procédé selon l'une ou plusieurs des revendications 7 à 9,
**caractérisé en ce que**
le processeur de machine de la machine à comprimés (10) communique avec le contrôleur intégré du connecteur (24) par l'intermédiaire d'un protocole USB.

11. Procédé selon l'une ou plusieurs des revendications 7 à 10,
**caractérisé en ce que**
le processeur de machine de la machine à comprimés (10) communique avec le contrôleur intégré du connecteur (24) par l'intermédiaire d'un système de communication, en particulier choisi dans le groupe Ethernet, Profibus, bus de terrain, bus CAN.
